# EUROPEAN PATENT SPECIFICATION

(11) **EP 3 986 974 B1**
(45) Date of publication and mention of the grant of the patent: **26.07.2023**
(21) Application number: 20732942.6
(22) Date of filing: 18.06.2020
(51) Int. Cl.: C09K 5/10

(54) **SILICATE BASED HEAT TRANSFER FLUID, METHODS OF ITS PREPARATIONS AND USES THEREOF**
SILIKATBASIERTES WÄRMETRANSFERFLUID, VERFAHREN ZU DESSEN HERSTELLUNG UND VERWENDUNGEN DAFÜR
FLUIDE DE TRANSFERT DE CHALEUR À BASE DE SILICATE, SES PROCÉDÉS DE PRÉPARATION ET D'UTILISATION

(30) Priority: 19.06.2019 EP 19181336
(43) Date of publication of application: 27.04.2022
(73) Proprietor: Arteco NV, 2900 Schoten (BE)
(72) Inventor: CLAEYS, Sandra, 9051 Gent (BE); LIEVENS, Serge, 9051 Gent (BE)
(74) Representative: Nederlandsch Octrooibureau
(86) International application number: PCT/EP2020/067008
(87) International publication number: WO 2020/254517

(56) References cited:
- CN-A- 106 590 554
- CN-A- 109 423 260
- US-A- 5 080 818

## Description

### Field of the invention

The present invention relates to silicate based heat-transfer fluids which may be formulated free of additives such as borates and/or nitrites. The invention further relates to concentrates and kits for the preparation of said silicate based heat-transfer fluids, to methods for the preparation of said silicate based heat-transfer fluids, and to the methods and uses employing said silicate based heat-transfer fluids.

### Background art

Heat-transfer fluids are widely employed in heat exchange systems associated with internal combustion engines, solar systems, fuel cells, electrical motors, generators, electronic equipment and the like. Heat-transfer fluids are generally composed of a base fluid and one or more additives.

Historically, water has been the preferred base fluid when considering heat-transfer. In many applications, antifreeze properties are needed and a base fluid consisting of water mixed with freezing point depressants like alcohols, glycols or salts is employed. The additives present in heat-transfer fluids may be employed to obtain a variety of functionalities, such as (further) lowering the freezing point, improving the heat-exchange properties, inhibiting corrosion etc. Since heat-transfer fluids are in continuous contact with metal parts (aluminum alloys, cast iron, steel, copper, brass, solder etc.) they nearly always contain one or more corrosion inhibitors.

Silicates such as inorganic silicates are known corrosion inhibitors which are particularly useful for providing aluminum protection. Although aluminum is increasingly being used as an alternative in today's engines, cast iron and steel are still frequently used for some parts of heavy-duty engines, such as the engine block, the cylinder liners, the crankshaft and the Exhaust Gas Recirculation cooler. Thus, heat-transfer fluids such as those used in heavy-duty engines need to comprise additional corrosion inhibitors; usually in the form of further inorganic corrosion inhibitors such as nitrites and/or borates, which are known for their ferrous alloy (such as cast iron/steel) corrosion protection properties.

For example, US5643493 describes a corrosion inhibitor concentrate comprising specific amounts of water, triazole, alkali metal hydroxide, borate, alkali metal silicate, silicate stabilizer and anti-foaming agent.

However, the use of nitrites and borates in coolant formulations is under pressure because of increased awareness of the associated health and environmental hazards. For example, sodium nitrite, which is used as a source for nitrites in heat-transfer fluids, is classified according CLP Regulation (EC) No 1272/2008 as Acute toxicity, Oral (Category 3) and Acute aquatic toxicity (Category 1). Borax used as a source for borates in heat-transfer fluids is classified as toxic for reproduction category 1B under the same Regulation. Thus, there is a need for alternative inorganic silicate based coolants which can reduce or eliminate the use of borates and/or nitrites.

CN109423260A discloses heat-transfer fluids comprising metasilicate and phthalic acid.

CN106590554A discloses heat-transfer fluids comprising metasilicate and phthalic acid.

US5080818 concerns an antifreeze composition which comprises a glycol and water, containing (A) a phosphoric acid compound, (B) a compound of at least one metal selected from the group consisting of manganese and magnesium, (C) a corrosion proofing agent, and (D) at least one compound selected from the group consisting of (a) an aromatic polybasic acid or a salt thereof, (b) an aliphatic dicarboxylic acid or a salt thereof, (c) a molybdate, (d) a tungstate, (e) a homopolymer derived from an alkylene glycol monoallyl ether or a maleic type monomer, and (f) a copolymer thereof with another monomer and having a pH value in the range of 6.5 to 9.

It is an object of the present invention to provide improved inorganic silicate based heat-transfer fluids.

It is a further object of the present invention to provide inorganic silicate based heat-transfer fluids comprising reduced amounts of nitrite and/or borate while possessing comparable or improved ferrous alloy (such as cast iron or steel) corrosion inhibition compared to known nitrite and/or borate containing heat-transfer fluids.

It is a further object of the present invention to provide inorganic silicate based heat-transfer fluids comprising no nitrite and/or borate while possessing comparable or improved ferrous alloy (such as cast iron or steel) corrosion inhibition compared to known nitrite and/or borate containing heat-transfer fluids.

It is a further object of the present invention to provide inorganic silicate based heat-transfer fluids possessing extended service life compared to known heat-transfer fluids, such as nitrite and/or borate containing heat-transfer fluids.

### Summary of the invention

The present inventors have surprisingly found that one or more of these objectives can be met by employing silicate based heat-transfer fluids further comprising an aromatic polyacid according to formula (I) or a salt thereof 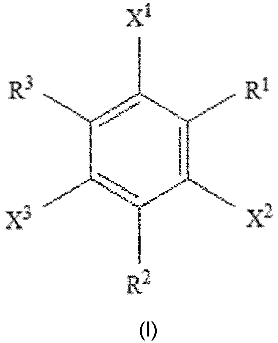
wherein R¹, R² and R³ are each independently selected from hydrogen, COOY, SO₂(OY) or PO(OY)₂;
wherein Y represents hydrogen, an alkali metal cation, an ammonium cation or combinations thereof;
wherein at least 2 of R¹, R² and R³ are not hydrogen; and
wherein X¹, X² and X³ are each independently selected from hydrogen, hydroxy, an alkyl, an aryl, an alcohol, an aldehyde, a ketone, an ester, an amide or an amine.

As will be shown in the appended examples, it was found that compositions comprising a silicate and compounds according to formula (I) exhibit increased corrosion inhibition on both aluminum and ferrous alloy substrates compared to similar compositions comprising borate or a different aromatic acid. It will be understood by the skilled person on the basis of this disclosure that by employing compositions in accordance with the invention, the amount of nitrites and/or borates employed in e.g. heat-transfer fluids can be significantly reduced or even completely eliminated. In addition, it may be possible to extend the service life of a known heat-transfer fluid by employing compositions in accordance with the invention.

Hence, in a first aspect the invention provides compositions exhibiting improved corrosion protection, comprising a base fluid, a silicate and an aromatic polyacid according to formula (I) or a salt thereof.

In preferred embodiments the compositions of the invention are provided in the form of ready-to-use compositions.

In preferred embodiments the compositions of the invention are provided in the form of concentrates for preparing the ready-to-use compositions described herein.

In another aspect the invention provides a kit for preparing the ready-to-use compositions described herein.

In another aspect the invention provides a method for preparing the compositions described herein.

In another aspect the invention provides a method for preparing the ready-to-use compositions described herein from a concentrate.

In another aspect the invention provides a method for preparing the ready-to-use compositions described herein from a kit.

In another aspect the invention provides corresponding uses of a compound according to formula (I) or a salt thereof.

In another aspect the invention provides corresponding uses of the ready-to-use compositions described herein.

### Description of embodiments

In a first aspect the invention provides compositions comprising a base fluid, a silicate and an aromatic polyacid according to formula (I) or a salt thereof. 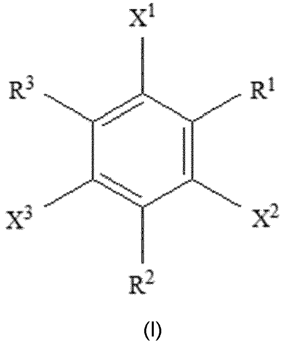
wherein R¹, R² and R³ are each independently selected from hydrogen, COOY, SO₂(OY) or PO(OY)₂;
wherein Y represents hydrogen, or a cation;
wherein at least 2 of R¹, R² and R³ are not hydrogen;
wherein X¹, X² and X³ are each independently selected from hydrogen, hydroxy, an alkyl, an aryl, an alcohol, an aldehyde, a ketone, an ester, an amide or an amine;
wherein the base fluid consists of water, an alcohol or a mixture thereof.

In highly-preferred embodiments, the composition comprises more than 80 wt.% (by total weight of the composition) base fluid, such as more than 85 wt.%, more than 90 wt.%, more than 95 wt.%, more than 98 wt.%, more than 99 wt.% or more than 99.5 wt.%.

### Silicate

The silicate employed in the composition in accordance with the invention may be an inorganic silicate or an organic silicate.

In preferred embodiments of the invention, the silicate is an inorganic silicate. As used herein, the term "inorganic silicate" refers to any salt wherein the anion consists of silicon and oxygen.

In preferred embodiments of the invention, the silicate is an inorganic silicate selected from the group consisting of potassium metasilicate, sodium orthosilicate, potassium disilicate, sodium metasilicate, potassium metasilicate, lithium metasilicate, lithium orthosilicate, rubidium disilicate, rubidium tetrasilicate, mixed silicates, tetramethylammonium silicate, tetraethylammonium silicate, ammonium silicate, tetrahydroxyethylammonium silicate, and combinations thereof. In highly preferred embodiments of the invention, the silicate is an alkali metal metasilicate, preferably an alkali metal metasilicate selected from sodium metasilicate, potassium metasilicate, and combinations thereof, most preferably sodium metasilicate.

In embodiments of the invention the silicate is an organic silicate ester, such as an organic orthosilicate of the type Si(OR)₄ wherein R is an alkyl, an aryl or a hydroxyalkyl group, preferably R is a C₁-C₈ alkyl, an aryl or a hydroxyalkyl group, preferably R is methyl, ethyl or propyl, most preferably R is methyl.

### Aromatic polyacid

It will be understood by the skilled person that the expressions "COOY", "SO₂(OY)" and "PO(OY)₂" used herein represent a carboxylic acid or salt thereof, a sulphonic acid or salt thereof and a phosphonic acid or salt thereof respectively.

It will be understood by the skilled person, based on the present teachings, that the aromatic polyacids comprised in the compositions according to the invention can be provided in free acid form, in the form of a salt, typically a base addition salt, in the form of a mixture of different salts or in the form of a mixture of the free acid and one or more salt forms. In preferred embodiments of the invention the compositions described herein are provided wherein Y represents hydrogen, an alkali metal cation, an ammonium cation or combinations thereof. In embodiments of the invention Y represents a cation. In principle, the invention is not limited to any specific (group) of salts and Y can represent any cation, preferably Y represents an alkali metal cation, an alkali earth metal cation, an ammonium cation or combinations thereof, more preferably Y represents an alkali metal cation, an ammonium cation or combinations thereof. In embodiments alkali metal cation is potassium or sodium, preferably sodium. In embodiments the ammonium cation is a quaternary ammonium cation represented by the formula (NRR'R"R‴)⁺ wherein R, R', R" and R‴ are independently selected from the group of branched or straight C₁-C₆ alkyls and branched or straight C₁-C₆ hydroxyalkyls, preferably from methyl, ethyl, n-propyl and isopropyl. In embodiments the ammonium cation is a protonated tertiary amine represented by the formula (HNRR'R")⁺ wherein R, R', and R" are independently selected from the group of branched or straight C₁-C₆ alkyls and branched or straight C₁-C₆ hydroxyalkyls, preferably from methyl, ethyl, n-propyl and isopropyl.

In preferred embodiments of the invention a composition as described herein is provided, wherein X¹, X² and X³ are independently selected from hydrogen, hydroxy, an alkyl or an alcohol, preferably X¹, X² and X³ are independently selected from hydrogen, hydroxy, a C₁-C₄ alkyl or a C₁-C₄ alcohol.

In certain embodiments of the invention a composition as described herein is provided, wherein at least one, preferably at least two, more preferably all of X¹, X² and X³ represent hydrogen, hydroxy, a C₁-C₄ alkyl or a C₁-C₄ alcohol.

In certain embodiments of the invention a composition as described herein is provided, wherein at least one, preferably at least two, more preferably all of X¹, X² and X³ represent hydrogen.

In certain embodiments of the invention a composition as described herein is provided, wherein at least one, preferably at least two, more preferably all of X¹, X² and X³ represent hydroxy.

In certain embodiments of the invention a composition as described herein is provided, wherein at least one, preferably at least two, more preferably all of X¹, X² and X³ represent an alkyl group selected from methyl, ethyl, n-propyl, isopropyl, n-butyl, sec-butyl, or tert-butyl.

In certain embodiments of the invention a composition as described herein is provided, wherein at least one, preferably at least two, more preferably all of X¹, X² and X³ represent an alkyl group selected from methyl or ethyl.

In certain embodiments of the invention a composition as described herein is provided, wherein at least one, preferably at least two, more preferably all of X¹, X² and X³ represents an aryl group selected from phenyl, 2-tolyl, 3-tolyl, 4-tolyl, 3-o-xylyl, 4-o-xylyl 2-m-xylyl, 4-m-xylyl, 2-p-xylyl, benzyl, 1-hydroxyphenyl, 2-hydroxyphenyl, 3-hydroxyphenyl, 4-hydroxyphenyl ,1-o-cresolyl, 3-o-cresolyl, 4-o-cresolyl, 5-o-cresolyl, 6-o-cresolyl, 1-m-cresolyl, 2-m-cresolyl, 4-m-cresolyl, 5-m-cresolyl, 6-m-cresolyl, 1-p-cresolyl, 2-p-cresolyl, 3-p-cresolyl, 1-aminophenyl, 2-aminophenyl, 3-aminophenyl, 2-methoxyphenyl, 3-methoxyphenyl, 4-methoxyphenyl, 1-naphtyl or 2-naphtyl, preferably selected from phenyl or 4-hydroxyphenyl.

In certain embodiments of the invention a composition as described herein is provided, wherein at least one, preferably at least two, more preferably all of X¹, X² and X³ represent an alcohol, preferably an alcohol selected from aliphatic branched and straight C₁-C₆ hydroxyalkyls, preferably an alcohol selected from hydroxymethyl, 1-hydroxyethyl, 2-hydroxyethyl, 1-hydroxypropyl, 2-hydroxypropyl, 3-hydroxypropyl, 1-hydroxybutyl, 2-hydroxybutyl, 3-hydroxybutyl, 4-hydroxybutyl.

In certain embodiments of the invention a composition as described herein is provided, wherein at least one, preferably at least two, more preferably all of X¹, X² and X³ represents an aldehyde or ketone selected from -(CH₂)ₙ(CO)Z, wherein n is 0, 1, 2, 3, 4 or 5 and Z is selected from the group consisting of hydrogen, branched or straight C₁-C₆ alkyls, preferably from hydrogen, methyl, ethyl, n-propyl, isopropyl, n-butyl, sec-butyl or tert-butyl.

In certain embodiments of the invention a composition as described herein is provided, wherein at least one, preferably at least two, more preferably all of X¹, X² and X³ represents an ester selected from -(CH₂)ₙ(COO)Z, wherein n is 0, 1, 2, 3, 4 or 5 and Z is selected from the group consisting of branched or straight C₁-C₆ alkyls, preferably from hydrogen, methyl, ethyl, n-propyl, isopropyl, n-butyl, sec-butyl or tert-butyl.

In certain embodiments of the invention a composition as described herein is provided, wherein at least one, preferably at least two, more preferably all of X¹, X² and X³ represents an amide selected from -(CH₂)ₙ(CON)Z¹Z², wherein n is 0, 1, 2, 3, 4 or 5 and Z¹ and Z² are independently selected from the group consisting of hydrogen, branched or straight C₁-C₆ alkyls, preferably from hydrogen, methyl, ethyl, n-propyl, isopropyl, n-butyl, sec-butyl or tert-butyl.

In certain embodiments of the invention a composition as described herein is provided, wherein at least one, preferably at least two, more preferably all of X¹, X² and X³ represents an amine selected from -(CH₂)ₙNZ¹Z², wherein n is 0, 1, 2, 3, 4 or 5 and Z¹ and Z² are independently selected from the group consisting of hydrogen, branched or straight C₁-C₆ alkyls and branched or straight C₁-C₆ hydroxyalkyls, preferably from hydrogen, methyl, ethyl, n-propyl, isopropyl, n-butyl, sec-butyl or tert-butyl.

In preferred embodiments of the invention a composition as described herein is provided, wherein one of R¹, R² and R³ is COOY.

In preferred embodiments of the invention a composition as described herein is provided, wherein one of R¹, R² and R³ is COOY and none of R¹, R² and R³ is hydrogen.

In preferred embodiments of the invention a composition as described herein is provided, wherein one of R¹, R² and R³ is COOY and X¹, X² and X³ are each independently selected from hydrogen and methyl.

In preferred embodiments of the invention a composition as described herein is provided, wherein one of R¹, R² and R³ is COOY and X¹, X² and X³ are hydrogen.

In preferred embodiments of the invention a composition as described herein is provided, wherein one of R¹, R² and R³ is hydrogen.

In highly preferred embodiments of the invention a composition, preferably a ready-to-use composition as described herein is provided, wherein R¹, R² and R³ are each independently selected from hydrogen, COOY or SO₂(OY);

In highly preferred embodiments of the invention a composition as described herein is provided, wherein the aromatic polyacid according to formula (I) is a compound according to formula (I)a, (I)b, (I)c or (I)d.

| **Formula** | **R¹** | **R²** | **R³** | **X³=X²=X³** |
|---|---|---|---|---|
| (I)a | COOY | COOY | COOY | H |
| (I)b | COOY | COOY | H | H |
| (I)c | COOY | SO₂(OY) | H | H |
| (I)d | COOY | PO(OY)₂ | H | H |

Thus, in preferred embodiments of the invention compositions are provided comprising an an alkali metal metasilicate, preferably sodium metasilicate and an aromatic polyacid according to formula (I) or a salt thereof. 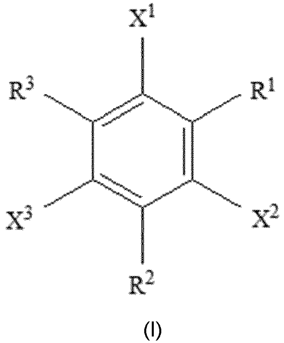
wherein R¹, R² and R³ are each independently selected from hydrogen, COOY, SO₂(OY) or PO(OY)₂;
wherein Y represents hydrogen or a cation;
wherein at least 2 of R¹, R² and R³ are not hydrogen;
wherein one of R¹, R² and R³ is COOY
wherein X¹, X² and X³ are hydrogen;
wherein the base fluid consists of water, monoethylene glycol, monopropylene glycol, 1,3-propanediol, glycerol or mixtures thereof; and
wherein the composition comprises more than 80 wt.% (by total weight of the composition) base fluid.

### Concentrations silicate and aromatic polyacid

In preferred embodiments the composition of the invention is provided comprising a silicate as described herein in an amount of more than 10 ppm Si (by weight), preferably more than 100 ppm Si. In preferred embodiments the composition of the invention is provided comprising a silicate as described herein in an amount of less than 10000 ppm Si (by weight), preferably less than 2000 ppm Si.

In preferred embodiments the composition of the invention is provided comprising more than 0.001 wt.% (by total weight of the composition) aromatic polyacid according to formula (I), preferably more than 0.01 wt.% aromatic polyacid according to formula (I). In preferred embodiments the composition of the invention is provided comprising less than 20 wt.% (by total weight of the composition) aromatic polyacid according to formula (I), preferably less than 10 wt.% aromatic polyacid according to formula (I).

If the aromatic polyacid according to formula (I) is employed in the form of a salt, the amount of aromatic polyacid as used in this document refers to the amount of aromatic polyacid anion (i.e. exclusive of the weight of the cationic counterion).

In preferred embodiments the composition of the invention is provided wherein the weight ratio of aromatic polyacid according to formula (I)to silicate is in the range of 100:1-1:100, preferably within the range of 50:1-1 :50, more preferably within the range of 20:1-1:20, more preferably within the range of 10:1-1:10, more preferably within the range of 5:1-1:5, most preferably within the range of 3:1-1:3. As used herein, if the aromatic polyacid is employed in the form of a salt and/or the silicate is an inorganic silicate, the weight ratio is calculated based on the aromatic polyacid anion and of the silicate anion (i.e. exclusive of the weight of the cationic counterion).

### Base fluid

In embodiments of the invention the base fluid consists of water, monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol.

As used herein, "monoethylene glycol" should be interpreted to mean "ethane-1,2-diol", and is interchangeably referred to as "MEG".

As used herein, "monopropylene glycol" should be interpreted to mean "propane-1,2-diol", and is interchangeably referred to as "MPG".

In highly preferred embodiments of the invention the base fluid consists of water, monoethylene glycol, monopropylene glycol, 1,3-propanediol, glycerol or mixtures thereof.

In embodiments of the invention the base fluid comprises more than 50 wt.% (by weight of the base fluid) water, preferably more than 70 wt.%, preferably more than 85 wt.%, preferably more than 95 wt.% water. In embodiments of the invention the base fluid consists of water.

In embodiments of the invention the base fluid comprises more than 50 wt.% (by weight of the base fluid) monoethylene glycol, preferably more than 70 wt.%, preferably more than 85 wt.%, preferably more than 95 wt.% monoethylene glycol. In embodiments of the invention the base fluid consists of monoethylene glycol.

In embodiments of the invention the base fluid comprises more than 50 wt.% (by weight of the base fluid) monopropylene glycol, preferably more than 70 wt.%, preferably more than 85 wt.%, preferably more than 95 wt.% monopropylene glycol. In embodiments of the invention the base fluid consists of monopropylene glycol.

In embodiments of the invention the base fluid comprises more than 50 wt.% (by weight of the base fluid) 1,3-propanediol, preferably more than 70 wt.%, preferably more than 85 wt.%, preferably more than 95 wt.% 1,3-propanediol. In embodiments of the invention the base fluid consists of 1,3-propanediol.

In embodiments of the invention the base fluid comprises more than 50 wt.% (by weight of the base fluid) glycerol, preferably more than 70 wt.%, preferably more than 85 wt.%, preferably more than 95 wt.% glycerol. In embodiments of the invention the base fluid consists of glycerol.

In embodiments of the invention, the composition provided herein is free of monoethylene glycol, monopropylene glycol, 1,3-propanediol, and glycerol. In embodiments of the invention, the composition provided herein is free of aliphatic polyols.

As will be understood by the person skilled in the art, the base fluid is normally added *'quantum satis'* and its amount is thus not particularly limited. In embodiments of the invention, the composition comprises less than 99.9 wt.% (by total weight of the composition) base fluid, such as less than 99.8 wt.%, less than 99.5 wt.% or less than 99 wt.%.

### Borate/Nitrite free

In highly preferred embodiments of the invention the composition provided herein is substantially free of inorganic borates. In embodiments the composition comprises less than 1000 ppm (by weight) of inorganic borates, preferably less than 200 ppm (by weight), preferably less than 50 ppm (by weight), more preferably less than 10 ppm (by weight) of inorganic borates.

If the inorganic borate is employed in the form of a salt, the amount of inorganic borate as used in this document refers to the amount of borate anion (i.e. exclusive of the weight of the cationic counterion).

In highly preferred embodiments of the invention the composition provided herein is substantially free of borates. In embodiments the composition comprises less than 1000 ppm (by weight) of borates, preferably less than 200 ppm (by weight), preferably less than 50 ppm (by weight), more preferably less than 10 ppm (by weight) of borates. The term "borates" as used herein refers to both inorganic and organic borates.

In highly preferred embodiments of the invention the composition provided herein is substantially free of inorganic nitrites. In embodiments the composition comprises less than 1000 ppm (by weight) of inorganic nitrites, preferably less than 200 ppm (by weight), preferably less than 50 ppm (by weight), more preferably less than 10 ppm (by weight) of inorganic nitrites.

In preferred embodiments of the invention the ready-to-use composition provided herein is substantially free of nitrites. In embodiments the ready-to-use composition comprises less than 1000 ppm (by weight) of nitrites, preferably less than 200 ppm (by weight), preferably less than 50 ppm (by weight), more preferably less than 10 ppm (by weight) of nitrites.

If the inorganic nitrite is employed in the form of a salt, the amount of inorganic nitrite as used in this document refers to the amount of nitrite anion (i.e. exclusive of the weight of the cationic counterion).

In highly preferred embodiments of the invention the composition provided herein is substantially free of inorganic nitrites and inorganic borates. In embodiments the composition comprises a combined amount of less than 1000 ppm (by weight) inorganic nitrites and inorganic borates, preferably less than 200 ppm (by weight), preferably less than 50 ppm (by weight), more preferably less than 10 ppm (by weight) inorganic nitrites and inorganic borates.

In preferred embodiments of the invention the composition provided herein is substantially free of nitrites and borates. In embodiments the composition comprises a combined amount of less than 1000 ppm (by weight) nitrites and borates, preferably less than 200 ppm (by weight), preferably less than 50 ppm (by weight), more preferably less than 10 ppm (by weight) nitrites and borates.

### pH

In preferred embodiments of the invention, a composition as defined herein is provided, wherein the composition has a pH between 6.5 and 11, more preferably between 7 and 9.

### Corrosion inhibition

As explained throughout this document, the compositions in accordance with the invention exhibit improved corrosion inhibition. Hence, in preferred embodiments of the invention, a composition as defined herein is provided wherein a cast iron coupon (EN-GJL-250, DIN EN 1561) submerged in the composition exhibits a weight loss of less than 20 mg, preferably less than 15 mg when tested in accordance with MTV 5061(2000) (heated) and/or wherein an aluminum coupon (EN AC-AISi10Mg(a)T6, DIN EN 1706) exhibits a weight loss of less than 10 mg, preferably less than 2 mg when tested in accordance with MTV 5061 (2000) (heated).

### Additives

In preferred embodiments composition of the invention further comprises one or more additives selected from the group consisting of corrosion inhibitors, antioxidants, anti-wear agents, detergents, antifoam agents. In preferred embodiments the composition of the invention further comprises one or more of said additives in an amount within the range of 0.001-10 wt.% (by total weight of the composition), preferably 0.01-5 wt.%.

In preferred embodiments the composition of the invention further comprises one or more additives selected from the group consisting of thiazoles, triazoles, polyolefins, polyalkylene oxides, silicon oils, aliphatic monocarboxylic acids, aliphatic dicarboxylic acids, aliphatic tricarboxylic acids, molybdates, and phosphates. In preferred embodiments the composition of the invention further comprises one or more of said additives in an amount within the range of 0.001-10 wt.% (by total weight of the composition), preferably 0.01-5 wt.%.

In preferred embodiments of the invention, a composition as defined herein is provided, wherein the composition further comprises a triazole or a thiazole, preferably an aromatic triazole or thiazole. In preferred embodiments of the invention, a composition as defined herein is provided, wherein the composition further comprises one or more triazoles selected from the group consisting of tolyltriazole, benzotriazole or combinations thereof.

In embodiments of the invention, a composition as defined herein is provided, wherein the composition further comprises the triazole or thiazole, preferably tolyltriazole or benzotriazole in an amount of more than 0.001 wt.% (by total weight of the composition), preferably more than 0.01 wt.%, preferably more than 0.1 wt.% and/or less than 10 wt.%, preferably less than 5 wt.%, preferably less than 3 wt.%.

In embodiments of the invention, a composition as defined herein is provided, wherein the composition further comprises a defoaming agent. Preferably, the defoaming agent is selected from the gorup consisting of a polyolefin, a polyalkylene oxide, a silicon polymer (such as a 3D silicon polymer) or a silicon oil.

In embodiments of the invention, a composition as defined herein is provided, wherein the composition further comprises the defoaming agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises a corrosion inhibitors selected from the group consisting of aromatic carboxylates, aliphatic monocarboxylates, aliphatic dicarboxylates, aliphatic tricarboxylates, molybdates, and phosphates.

In embodiments of the invention, a composition as defined herein is provided, wherein the composition further comprises an aliphatic monocarboxylate, preferably an aliphatic monocarboxylate selected from the group consisting of C₄-C₁₂ aliphatic monocarboxylates, preferably an aliphatic monocarboxylate selected from the group consisting of C₇-C₁₀ aliphatic monocarboxylates, more preferably an aliphatic monocarboxylate selected from the group consisting of C₈-C₉ aliphatic monocarboxylates, in an amount of more than 0.01 wt.% (by total weight of the composition), preferably more than 0.1 wt.%, preferably more than 0.5 wt.% and/or less than 10 wt.%, preferably less than 5 wt.%, preferably less than 3 wt.%.

In embodiments of the invention, a composition as defined herein is provided, wherein the composition further comprises an aliphatic dicarboxylate, preferably an aliphatic dicarboxylate selected from the group consisting of C₆-C₁₆ aliphatic dicarboxylates, in an amount of more than 0.01 wt.% (by total weight of the composition), preferably more than 0.1 wt.%, preferably more than 0.3 wt.% and/or less than 10 wt.%, preferably less than 5 wt.%, preferably less than 3 wt.%.

In embodiments of the invention, a composition as defined herein is provided, wherein the composition further comprises an aliphatic tricarboxylate, preferably an aliphatic tricarboxylate selected from the group consisting of C₇-C₁₈ aliphatic tricarboxylates, in an amount more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises an aromatic carboxylate, preferably an aromatic carboxylate selected from the group consisting of benzoate, benzene-1,2-dicarboxylate, benzene-1,2,3-tricarboxylate, benzene-1,2,4-tricarboxylate, benzene-1,4-dicarboxylate and combinations thereof, in an amount more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises a molybdate, preferably an inorganic molybdate in an amount of more than 1 ppm (by weight) molybdate, preferably more than 10 ppm, preferably more than 100 ppm and/or less than 10000 ppm, preferably less than 1000 ppm, preferably less than 500 ppm.

If the molybdate is employed in the form of a salt, the amount of molybdate as used in this document refers to the amount of molybdate anion (i.e. exclusive of the weight of the cationic counterion).

In embodiments of the invention, a composition as defined herein is provided, wherein the composition further comprises a phosphate, preferably an inorganic phosphate in an amount of more than 1 ppm (by weight) phosphate, preferably more than 10 ppm, preferably more than 100 ppm and/or less than 10000 ppm, preferably less than 1000 ppm, preferably less than 500 ppm.

If the phosphate is employed in the form of a salt, the amount of phosphate as used in this document refers to the amount of phosphate anion (i.e. exclusive of the weight of the cationic counterion).

In embodiments of the invention, a composition as defined herein is provided, wherein the composition further comprises an antioxidant. Preferably, the antioxidant is selected from the group consisting of phenols, such as 2,6 di-t-butyl methylphenol and 4,4'-methylene-bis(2,6-di-t-butylphenol); aromatic amines, such as p,p-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkyl-phenyl-2-naphthal-amines, as well as sulphur containing compounds, e.g. dithiophosphates, phosphites, sulphides and dithio metal salts, such as benzothiazole, tin-dialkyldithiophosphates and zinc diaryldithiophosphates.

In embodiments of the invention, a composition as defined herein is provided, wherein the composition further comprises an antioxidant in an amount more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises an antiwear agent. Preferably, the antiwear agent is selected from the group consisting of phosphate esters, phosphites, thiophosphites, e.g. zinc dialkyl dithiophosphates, zinc diaryldithiophosphates, tricresyl phosphates, chlorinated waxes, sulphurised fats and olefins, such as thiodipropionic esters, dialkyl sulphides, dialkyl polysulphides, alkylmercaptanes, dibenzothiophenes and 2,2'-dithiobis(benzothiazole); organic lead compounds, fatty acids, halogen substituted organosilicon compounds, and halogen-substituted phosphorus compounds.

In embodiments of the invention, a composition as defined herein is provided, wherein the composition further comprises the antiwear agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises a surfactant. Preferably, the surfactant is selected from the group consisting of anionic surfactants, such as anionic surfactants which are the salt of a compound represented by R-X; wherein X represents a sulfate group, a phosphate group, a sulfonate group, or a carboxylate group, preferably a sulfate group; and wherein R is selected from:
- branched or straight chain C₅-C₂₄ alkyl groups;
- branched or straight chain mono-unsaturated C₅-C₂₄ alkenyl groups;
- branched or straight chain poly-unsaturated C₅-C₂₄ alkenyl groups;
- alkylbenzene groups comprising a C₈-C₁₅ alkyl;
- alkenylbenzene groups comprising a C₈-C₁₅ alkenyl;
- alkylnaphthalene groups comprising a C₃-C₁₅ alkyl;
- alkenylnaphthalene groups comprising a C₃-C₁₅ alkenyl;
- alkylphenol groups comprising a C₈-C₁₅ alkyl; and
- alkenylphenol groups comprising a C₈-C₁₅ alkenyl.

In embodiments of the invention, a composition as defined herein is provided, wherein the composition further comprises the surfactant in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In highly preferred embodiments, the composition as described herein is a heat-transfer fluid, preferably a heat-transfer fluid suitable for use in a combustion engine, a solar system, a fuel cell, an electrical motor, a generator, a battery, a battery electric vehicle, or electronic equipment, most preferably a heat-transfer fluid suitable for use in a combustion engine (also referred to as an engine coolant).

As will be understood by the skilled person, depending on (for example) the intended application, the compositions in accordance with the invention may be formulated and used at various concentrations. Hence, the invention is not particularly limited by the concentration of silicate, aromatic polyacid according to formula (I) or other additives described herein. Thus, depending on the envisaged application, the compositions described herein may be suitable for use as is, or may require dilution by base fluid before use. However, the present inventors have found that it is particularly advantageous to provide the compositions of the invention in the form of a ready-to-use composition which may be suitable for use as a combustion engine coolant or in the form of a concentrate which is suitable to prepare said ready-to-use composition.

### Ready-to-use

In a highly preferred embodiment of the invention, the composition as described herein is provided in the form of a ready-to-use composition wherein:
- the concentration of the silicate is within the range of 30-150 ppm Si (by weight), preferably within the range of 50-140 ppm Si, preferably within the range of 70-130 ppm Si, most preferably within the range of 75-125 ppm Si; and
- the composition comprises more than 90 wt.%, preferably more than 95 wt.%, preferably more than 98 wt.%, preferably more than 99 wt.% base fluid.

In embodiments of the invention the ready-to-use composition provided herein comprises the silicate at a concentration of more than 35 ppm Si (by weight), more than 40 ppm Si, more than 45 ppm Si, more than 55 ppm Si, more than 60 ppm Si, more than 65 ppm Si, or more than 70 ppm Si.

In embodiments of the invention the ready-to-use composition provided herein comprises the silicate at a concentration of less than 150 ppm Si (by weight), less than 145 ppm Si, less than 140 ppm Si, less than 135 ppm Si or less than 130 ppm Si. In embodiments of the invention the ready-to-use composition provided herein comprises less than 150 ppm Si (by weight), less than 145 ppm Si, less than 140 ppm Si, less than 135 ppm Si or less than 125 ppm Si.

In embodiments of the invention the ready-to-use composition provided herein comprises more than 0.002 wt.% (by total weight of the composition) aromatic polyacid according to formula (I), preferably more than 0.004 wt.%, preferably more than 0.008 wt.%, preferably more than 0.01 wt.%, preferably more than 0.012 wt.%, preferably more than 0.015 wt.%, preferably more than 0.020 wt.%, preferably more than 0.025 wt.%, preferably more than 0.03 wt.%, preferably more than 0.04 wt.%, preferably more than 0.05 wt.%, preferably more than 0.07 wt.%, aromatic polyacid according to formula (I).

In embodiments of the invention the ready-to-use composition provided herein comprises less than 1 wt.% (by total weight of the composition) aromatic polyacid according to formula (I), preferably less than 0.5 wt.%, more preferably less than 0.25 wt.% aromatic polyacid according to formula (I).

In embodiments of the invention the ready-to-use composition provided herein comprises less than 5 wt.% (by total weight of the composition) aromatic polyacid according to formula (I), preferably less than 2 wt.%, preferably less than 1 wt.%, preferably less than 0.80 wt.%, preferably less than 0.75 wt.%, preferably less than 0.70 wt.%, preferably less than 0.65 wt.%, preferably less than 0.60 wt.%, preferably less than 0.55 wt.%, preferably less than 0.50 wt.%, preferably less than 0.45 wt.%, preferably less than 0.40 wt.%, preferably less than 0.35 wt.%, preferably less than 0.30 wt.%, aromatic polyacid according to formula (I).

In preferred embodiments the ready-to-use composition provided herein comprises 0.001-5 wt.% (by total weight of the composition) aromatic polyacid according to formula (I), preferably 0.01-1 wt.%, more preferably 0.05-0.25 wt.% aromatic polyacid according to formula (I).

In preferred embodiments the ready-to-use composition provided herein comprises 30-70wt.% (by total weight of the composition) of a polyalcohol, preferably a polyacohol selected from the group consisting of monoethylene glycol, monopropylene glycol, 1,3-propanediol and glycerol, most preferably monoethylene glycol.

### Concentrate

In a preferred embodiment of the invention the composition as described herein is provided in the form of a concentrate suitable to prepare the ready-to-use composition described herein.

In preferred embodiments, the concentrate is suitable to prepare the ready-to-use composition described herein by addition of water and/or alcohol; preferably by addition of water, monoethylene glycol, monopropylene glycol, 1,3-propanediol and/or glycerol; most preferably by addition of water. In highly preferred embodiments, the concentrate is suitable to prepare the ready-to-use composition solely by addition of water and/or alcohol; preferably solely by addition of water, monoethylene glycol, monopropylene glycol, 1,3-propanediol and/or glycerol; most preferably solely by addition of water (i.e. no other ingredients need to be added in order to prepare the ready-to-use composition described herein from the concentrate).

In embodiments the concentrate is provided wherein the concentration of the silicate is more than 150 ppm Si (by weight), preferably more than 170 ppm Si, preferably more than 185 ppm Si, most preferably more than 200 ppm Si.

In preferred embodiments the concentrate is provided wherein the concentration of the silicate is within the range of 151-300 ppm Si (by weight), preferably within the range of 151-275 ppm Si, more preferably within the range of 180-260 ppm Si, most preferably within the range of 190-250 ppm Si.

In preferred embodiments the concentrate is provided wherein the concentration of the silicate is within the range of 301-10000 ppm Si (by weight), preferably within the range of 500-9000 ppm Si, more preferably within the range of 800-8000 ppm Si, most preferably within the range of 1000-7000 ppm Si.

In preferred embodiments the concentrate comprises a base fluid as defined herein; a silicate as defined herein; and an aromatic polyacid according to formula (I) or a salt thereof as defined herein wherein the concentration of the silicate is more than 150 ppm Si (by weight), preferably more than 170 ppm Si, preferably more than 185 ppm Si, most preferably more than 200 ppm Si and wherein more than 80 wt.%, preferably more than 85 wt.%, preferably more than 90 wt.% of the concentrate is a polyalcohol, preferably a polyacohol selected from the group consisting of monoethylene glycol, monopropylene glycol, 1,3-propanediol and glycerol, most preferably monoethylene glycol.

In preferred embodiments the concentrate comprises a base fluid as defined herein; a silicate as defined herein; and an aromatic polyacid according to formula (I) or a salt thereof as defined herein wherein the concentration of the silicate is more than 150 ppm Si (by weight), preferably more than 170 ppm Si, preferably more than 185 ppm Si, most preferably more than 200 ppm Si and wherein more than 80 wt.%, preferably more than 85 wt.%, preferably more than 90 wt.% of the concentrate is water.

In preferred embodiments the concentrate comprises a base fluid as defined herein; a silicate as defined herein; and an aromatic polyacid according to formula (I) or a salt thereof as defined herein; and the concentrate comprises the aromatic polyacid in an amount of more than 0.01 wt.% (by total weight of the concentrate), preferably more than 0.09 wt.%.

In embodiments the concentrate comprises a base fluid as defined herein; a silicate as defined herein; and an aromatic polyacid according to formula (I) or a salt thereof as defined herein; wherein the concentration of the silicate is within the range of 151-300 ppm Si (by weight), preferably within the range of 151-275 ppm Si, more preferably within the range of 180-260 ppm Si, most preferably within the range of 190-250 ppm Si and wherein the concentrate comprises the aromatic polyacid in an amount of more than 0.1 wt.% (by total weight of the concentrate), preferably more than 0.3 wt.%, more preferably more than 0.7 wt.%.

In embodiments the concentrate comprises a base fluid as defined herein; a silicate as defined herein; and an aromatic polyacid according to formula (I) or a salt thereof as defined herein; wherein the concentration of the silicate is within the range of 301-10000 ppm Si (by weight), preferably within the range of 500-9000 ppm Si, more preferably within the range of 800-8000 ppm Si, most preferably within the range of 1000-7000 ppm Si and wherein the concentrate comprises the aromatic polyacid in an amount of more than 1 wt.% (by total weight of the concentrate), preferably more than 2 wt.%, more preferably more than 5 wt.%.

### Methods of preparation

In another aspect of the invention there is provided a method to prepare a composition as defined herein, comprising the steps of:
(i) providing a base fluid as defined herein;
(ii) providing a silicate as defined herein;
(iii) providing an aromatic polyacid in accordance with formula (I) as defined herein;
(iv) optionally providing further additives as defined herein; and
(v) combining the base fluid of step (i) with the silicate of step (ii), the aromatic polyacid of step (iii) and the optional further additives of step (iv) to obtain the composition.

In accordance with the invention the order of addition of the compounds is not particularly limited.

In another aspect of the invention there is provided a method to prepare a ready-to-use composition as defined herein, comprising the steps of:
(i) providing a concentrate as defined herein;
(ii) providing water, alcohol or a mixture thereof;
(iii) optionally providing further additives as defined herein; and
(iv) combining the concentrate of step (i) with the water, alcohol or a mixture thereof of step (ii) and the optional further additives of step (iv) to obtain the ready-to-use composition.

In preferred embodiments there is provided a method to prepare a ready-to-use composition as defined herein, consisting of the following steps:
(i) providing a concentrate as defined herein;
(ii) providing water, alcohol or a mixture thereof;
(iii) combining the concentrate of step (i) with the water, alcohol or a mixture thereof of step (ii) to obtain the ready-to-use composition.

In highly preferred embodiments the alcohol of step two is selected from the group consisting of monoethylene glycol, monopropylene glycol, 1,3-propanediol and combinations thereof.

In preferred embodiments step (ii) comprises providing more than 50 wt.% (by weight of the concentrate) water, alcohol or a mixture thereof, preferably more than 100 wt.%, more than 150 wt.% more than 200 wt.% or more than 500 wt.% water, alcohol or a mixture thereof.

### Kit of parts

In another aspect of the invention there is provided a kit for preparing a composition, preferably a ready-to-use composition as defined herein comprising
(i) a first container comprising a first solution of silicate as defined herein in water, alcohol or mixtures thereof, preferably in water, monoethylene glycol, monopropylene glycol, 1,3-propanediol, glycerol, or mixtures thereof, more preferably in water, monoethylene glycol or mixtures thereof, most preferably in water; and
(ii) a second container comprising a second solution of aromatic polyacid as defined herein in water, alcohol or mixtures thereof, preferably in water, monoethylene glycol, monopropylene glycol, 1,3-propanediol, glycerol, or mixtures thereof, more preferably in water, monoethylene glycol or mixtures thereof, most preferably in water; and
wherein the concentration of silicate is more than 100 ppm Si (by weight of the solution in the first container), preferably more than 400 ppm Si, preferably more than 1000 ppm Si; and wherein the concentration of aromatic polyacid is more than 0.1 wt.% (by total weight of the solution in the second container), preferably more than 1 wt.%, more preferably more than 5 wt.%.

In embodiments the kit further comprises instructions for combining the first container and second container and the water, alcohol and mixture thereof in order to obtain the compositions exhibiting improved corrosion inhibition in accordance with the invention.

In another aspect of the invention there is provided a method to prepare a composition, preferably a ready-to-use composition as defined herein, comprising the following steps:
(i) providing a kit as defined herein comprising a first container as defined herein and a second container as defined herein;
(ii) providing water, alcohol or a mixture thereof;
(iii) optionally providing further additives as defined herein; and
(iv) combining the first container of the kit provided in step (i) with the second container of the kit provided in step (i), the water, alcohol or a mixture thereof of step (ii) and the optional further additives of step (iii) to obtain the ready-to-use composition.

In embodiments of the invention there is provided a method to prepare a composition, preferably a ready-to-use composition as defined herein, consisting of the steps:
(i) providing a kit as defined herein comprising a first container as defined herein and a second container as defined herein;
(ii) providing water, alcohol or a mixture thereof;
(iii) combining the first container of the kit provided in step (i) with the second container of the kit provided in step (i) and the water, alcohol or a mixture thereof of step (ii) to obtain the ready-to-use composition.

In highly preferred embodiments the alcohol of step (ii) is selected from the group consisting of monoethylene glycol, monopropylene glycol, 1,3-propanediol and combinations thereof.

In accordance with the invention the order of addition of the components is not particularly limited.

In preferred embodiments step (ii) comprises providing more than 50 wt.% (by combined weight of the first and second solution) water, alcohol or a mixture thereof, preferably more than 100 wt.%, more than 150 wt.% more than 200 wt.% or more than 500 wt.% water, alcohol or a mixture thereof.

### Uses/Methods

In another aspect of the invention there is provided the use of the composition, preferably the ready-to-use composition provided herein as a heat-transfer fluid, preferably as a heat-transfer fluid in a combustion engine, a solar system, a fuel cell, an electrical motor, a generator, a battery, a battery electric vehicle, or electronic equipment, most preferably as a heat-transfer fluid in a combustion engine.

In another aspect of the invention there is provided a method of inhibiting corrosion comprising contacting the composition, preferably the ready-to-use composition provided herein with a metal surface.

In another aspect of the invention there is provided a combustion engine, a solar system, a fuel cells, an electrical motor, a generator, or electronic equipment comprising the composition, preferably the ready-to-use composition as described herein.

In another aspect of the invention there is provided the use of a compound according to formula (I) as described herein to improve the corrosion inhibition of a heat-transfer fluid, preferably, to improve the corrosion inhibition of a heat-transfer fluid comprising a silicate as described herein, more preferably, to improve the corrosion inhibition of a heat-transfer fluid comprising a silicate as described herein wherein the heat-transfer fluid is free of borates and/or nitrites.

In another aspect of the invention there is provided a method of exchanging heat, comprising:
a. generating heat in a system selected from a combustion engine, a solar system, a fuel cell, an electrical motor, a generator, a battery, a battery electric vehicle, or electronic equipment, preferably in a combustion engine;
b. contacting a composition as described herein, preferably a ready-to-use composition as described herein with the system of step a;
c. transferring heat from the system to the composition;
d. passing the composition through a heat exchanger; and
e. transferring heat away from the composition.

### Examples

### Example 1

The surprising effects of compositions in accordance with the invention on cast iron and steel protection was demonstrated by immersion of a cast iron and a steel specimen in said composition using the following test conditions.

**A** metal test bundle was prepared according to a modified version of ASTM D1384-05 (reapproved in 2012). A cast iron specimen (EN-GJL-250, DIN EN 1561) and a steel specimen (FePO4, DIN EN 10130) are separated by a steel spacer and insulating spacers made from tetrafluoroethylene are used between the test bundle and the brass legs (CuZn37, DIN 17660). The samples are completely immersed in 400 ml of a 40 v% dilution using deionized water of the compositions shown in the below table. The flask containing the solution and metal specimen is closed and put in an oven for 168 hours at 90 °C. Table 1 shows the formulation of different compositions in accordance with the invention (which are heat-transfer fluids). Table 2 shows the formulation of the comparative examples. All compositions were formulated using the same amount of ingredients for which a range has been specified and the same ingredients in case an ingredient has been generically specified.

**Table 1 : heat-transfer fluid compositions**

| | **Ex.1** | **Ex.2** | **Ex.3** | **Ex.4** |
|---|---|---|---|---|
| | **wt%** | **wt%** | **wt%** | **wt%** |
| Mono ethylene glycol | > 90 | > 90 | > 90 | > 90 |
| aliphatic monocarboxylic acid 1 | 1.0-2.0 | 1.0-2.0 | 1.0-2.0 | 1.0-2.0 |
| aliphatic dicarboxylic acid 1 | 0.50-1.50 | 0.50-1.50 | 0.50-1.50 | 0.50-1.50 |
| aliphatic dicarboxylic acid 2 | 0.20-0.50 | 0.20-0.50 | 0.20-0.50 | 0.20-0.50 |
| benzene-1,3,5-tricarboxylic acid | 0.10 | 0 | 0 | 0 |
| Benzene-1,3-dicarboxylic acid | 0 | 0.05 | 0 | 0 |
| 3-sulfobenzoic acid disodium salt.H₂O | 0 | 0 | 0.16 | 0 |
| 3-carboxyphenylphosphonic acid | 0 | 0 | 0 | 0.12 |
| Tricarboxylic acid | 0.02-0.05 | 0.02-0.05 | 0.02-0.05 | 0.02-0.05 |
| Polyvinylpyrrolidone | 0.04-0.10 | 0.04-0.10 | 0.04-0.10 | 0.04-0.10 |
| Sodium hydroxide (50%) | 2.62 | 2.62 | 2.62 | 2.62 |
| Triazole | 0.20 | 0.20 | 0.20 | 0.20 |
| Sodium molybdate dihydrate | 0.06 | 0.06 | 0.06 | 0.06 |
| Silicate | 0.10-0.20 | 0.10-0.20 | 0.10-0.20 | 0.10-0.20 |
| Antifoam | 0.02 | 0.02 | 0.02 | 0.02 |

**Table 2: heat-transfer fluid compositions (comparative examples)**

| | **Comp. Ex.5** | **Comp. Ex.6** | **Comp. Ex.7** | **Comp. Ex.8** | **Comp. Ex.9** | **Comp. Ex.10** |
|---|---|---|---|---|---|---|
| | **wt%** | **wt%** | **wt%** | **wt%** | **wt%** | **wt%** |
| Mono ethylene glycol | > 90 | > 90 | > 90 | > 90 | > 90 | > 90 |
| aliphatic mono carboxylic acid 1 | 1.0-2.0 | 1.0-2.0 | 1.0-2.0 | 1.0-2.0 | 1.0-2.0 | 1.0-2.0 |
| aliphatic dicarboxylic acid 1 | 0.50-1.50 | 0.50-1.50 | 0.50-1.50 | 0.50-1.50 | 0.50-1.50 | 0.50-1.50 |
| aliphatic dicarboxylic acid 2 | 0.20-0.50 | 0.20-0.50 | 0.20-0.50 | 0.20-0.50 | 0.20-0.50 | 0.20-0.50 |
| Sodium benzoate | 0 | 0 | 0.10 | 0.50 | 0 | 0 |
| Benzene-1,2-dicarboxylic acid | 0 | 0 | 0 | 0 | 0.10 | 0 |
| 1,3-cyclohexanedicarboxylic acid | 0 | 0 | 0 | 0 | 0 | 0.21 |
| Tricarboxylic acid | 0.02-0.05 | 0.02-0.05 | 0.02-0.05 | 0.02-0.05 | 0.02-0.05 | 0.02-0.05 |
| Polyvinylpyrrolidone | 0.04-0.10 | 0.04-0.10 | 0.04-0.10 | 0.04-0.10 | 0.04-0.10 | 0.04-0.10 |
| Sodium hydroxide (50%) | 2.62 | 2.62 | 2.62 | 2.62 | 2.62 | 2.62 |
| Triazole | 0.20 | 0.20 | 0.20 | 0.20 | 0.20 | 0.20 |
| Sodium molybdate dihydrate | 0.06 | 0.06 | 0.06 | 0.06 | 0.06 | 0.06 |
| Borax pentahydrate | 0 | 0.76 | 0 | 0 | 0 | 0 |
| Silicate | 0.10-0.20 | 0.10-0.20 | 0.10-0.20 | 0.10-0.20 | 0.10-0.20 | 0.10-0.20 |
| Antifoam | 0.02 | 0.02 | 0.02 | 0.02 | 0.02 | 0.02 |

**At** the end of the test the metal specimens are immediately disassembled and cleaned with a soft bristle brush and water after which the individual specimens are subjected to an additional cleaning treatment. The specimens are immersed once for 10 minutes at room temperature in a 10 v% hydrochloric acid solution in deionized water containing 0.1 v% propargylalcohol (as corrosion inhibitor). Next the specimens are cleaned with water and dried. The weight loss of the metal specimens is determined and provides insight in the corrosion protection performance of the compositions according to the invention. Table 3 shows a summary of results for the examples according to the invention (Ex. 1-4) and for the comparative examples (Comp. Ex. 5-10). It can be seen that for the examples in accordance with the invention (Ex. 1-4) significant lower weight losses are obtained on the cast iron and steel specimen in comparison with the comparative examples. The steel protection obtained in comparative example 6 is due to the use of borates.

**Table 3: Results of the test of example 1**

| | **Weight loss of metal specimen after oven test and cleaning (mg)** | |
|---|---|---|
| | Cast iron (EN-GJL-250) | Steel (FePO4) |
| Example 1 | 1.5 | 0.5 |
| Example 2 | 0.4 | 0.5 |
| Example 3 | 0.8 | 0.2 |
| Example 4 | 2.4 | 1.6 |
| Comparative example 5 | 3.7 | 3.3 |
| Comparative example 6 | 2.5 | 0.3 |
| Comparative example 7 | 3.3 | 3 |
| Comparative example 8 | 3.4 | 2.6 |
| Comparative example 9 | 2.7 | 3.9 |
| Comparative example 10 | 4.7 | 2.3 |

### Example 2

The surprising effects of compositions in accordance with the invention on cast iron and aluminium was additionally demonstrated under dynamic heat transfer conditions according to test method MTV 5061 (2000). In this test a 40 v% dilution using deionized water of the compositions described in tables 1 and 2 of example 1 is circulated in a test rig including a test cell with a heated and unheated cast iron coupon (EN-GJL-250, DIN EN 1561) and a second test cell with a heated and unheated aluminium coupon (EN AC-AlSi10Mg(a)T6, DIN EN 1706). Additionally, a container with metal test bundle is installed in the circulation test rig. The metal test bundle also contains the same type of cast iron and steel specimen as used in the oven test together with other metal specimen. At the end of the test the metal specimens are immediately disassembled and cleaned with a soft bristle brush and water after which the individual specimens are subjected to an additional cleaning treatment as described in the method MTV 5061 (2000). The cast iron and steel specimens are immersed once for 10 minutes at room temperature in a 10 v% hydrochloric acid solution in deionized water containing 0.1 v% propargylalcohol (as corrosion inhibitor). Next, the specimens are cleaned with water and dried. Table 4 shows a summary of results obtained for the examples according to the invention (Ex. 1-2) and for a comparative examples (Comp. Ex. 5). As can be seen from the below table, amongst others significantly improved cast iron, steel, and aluminium protection is obtained with the examples of this invention (Ex. 1-2) in comparison with the comparative example.

**Table 4: Results of the heat transfer compositions under dynamic conditions**

| | | **Weight loss of metals after dynamic test and cleaning (mg)¹** | | |
|---|---|---|---|---|
| | | **Ex. 1** | **Ex. 2** | **Comp. Ex. 5** |
| **Test cell 1 Cast iron (EN-GJL-250)** | Non heated | 10 | 16 | 27 |
| | Heated | 12 | 12 | 17 |
| **Test cell 2 Aluminum (EN AC - AISi10Mg(a)T6)** | Non heated | 3 | 0 | 1 |
| | Heated | 0 | 0 | 10 |
| **Container with metal test bundle** | Cu-ETP (DIN EN 1976) | 0,1 | 0,3 | 0,4 |
| | S-Pb58Sn40Sb2 (DIN EN 29453) | 2,1 | 2,6 | 4,3 |
| | CuZn37 (DIN 17660) | 0,6 | 0,2 | 0,4 |
| | CuNi10Fe1Mn (DIN 17664) | 0,4 | 0,7 | 0,5 |
| | FePO4 (DIN EN 10130) | 1,4 | 0,4 | 7,2 |
| | EN-GJL-250 (DIN EN 1561) | 3,3 | 2,5 | 12,8 |
| | EN AW-2017(A) (DIN EN 573-3) | 0,1 | 0,3 | -0,2 |
| | EN AW-2024 (DIN EN 573-3) | 0,0 | 0,1 | 0,3 |
| | EN AC -AISi10Mg(a)T6 (DIN EN 1706) | -0,1 | -0,2 | 0,0 |

| | | | | |
|---|---|---|---|---|
| ¹ a negative sign indicates weight gain | | | | |

## Claims

1. A composition comprising a base fluid, a silicate and an aromatic polyacid according to formula (I) or a salt thereof 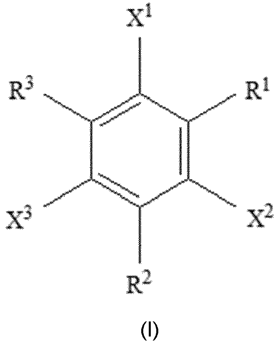
wherein R¹, R² and R³ are each independently selected from hydrogen, COOY, SO₂(OY) or PO(OY)₂;
wherein Y represents hydrogen or a cation;
wherein at least 2 of R¹, R² and R³ are not hydrogen;
wherein X¹, X² and X³ are each independently selected from hydrogen, hydroxy, an alkyl, an aryl, an alcohol, an aldehyde, a ketone, an ester, an amide or an amine; and
wherein the base fluid consists of water, an alcohol or mixtures thereof.

2. The composition according to claim 1 wherein the silicate is an inorganic silicate, preferably an alkali metal metasilicate, preferably sodium metasilicate.

3. The composition according to claim 1 or 2 wherein X¹, X² and X³ are independently selected from hydrogen, hydroxy, an alkyl or an alcohol, preferably X¹, X² and X³ are independently selected from hydrogen, hydroxy, a C₁-C₄ alkyl or a C₁-C₄ alcohol.

4. The composition according to any one of claims 1-3 wherein wherein the aromatic polyacid according to formula (I) is a compound according to formula (I)a, (I)b, (I)c or (I)d.
| **Formula** | **R¹** | **R²** | **R³** | **X³=X²=X³** |
|---|---|---|---|---|
| (I)a | COOY | COOY | COOY | H |
| (I)b | COOY | COOY | H | H |
| (I)c | COOY | SO₂(OY) | H | H |
| (I)d | COOY | PO(OY)₂ | H | H |

5. The composition according to any one of claims 1-4 wherein the base fluid consists of water, monoethylene glycol, monopropylene glycol, 1,3-propanediol, glycerol or mixtures thereof.

6. The composition according to any one of claims 1-5 wherein the weight ratio of aromatic polyacid according to formula (I) to silicate is in the range of 100:1-1:100, preferably within the range of 50:1-1:50, more preferably within the range of 20:1-1:20, more preferably within the range of 10:1-1:10, more preferably within the range of 5:1-1:5, most preferably within the range of 3:1-1:3.

7. The composition according to any one of claims 1-6 wherein the composition comprises more than 80 wt.% (by total weight of the composition) base fluid, such as more than 85 wt.%, more than 90 wt.%, more than 95 wt.%, more than 98 wt.%, more than 99 wt.% or more than 99.5 wt.%.

8. The composition according to any one of claims 1-7 further comprising one, two or three of the following:
• a molybdate, preferably an inorganic molybdate in an amount of more than 1 ppm (by weight) molybdate, preferably more than 10 ppm (by weight), preferably more than 100 ppm (by weight) molybdate;
• a triazole, preferably tolyltriazole or benzotriazole in an amount of more than 0.001 wt.% (by total weight of the composition), preferably more than 0.01 wt.%, preferably more than 0.1 wt.%; and
• an aliphatic monocarboxylate, preferably an aliphatic monocarboxylate selected from the group consisting of C₇-C₁₀ aliphatic monocarboxylates, more preferably an aliphatic monocarboxylate selected from the group consisting of C₈-C₉ aliphatic monocarboxylates, in an amount of more than 0.01 wt.% (by total weight of the composition), preferably more than 0.1 wt.%, preferably more than 0.5 wt.%.

9. The composition according to any one of claims 1-8 which is a ready-to-use composition wherein:
• the concentration of the silicate is within the range of 30-150 ppm Si (by weight), preferably within the range of 50-140 ppm Si, preferably within the range of 70-130 ppm Si, most preferably within the range of 75-125 ppm Si; and
• the composition comprises more than 90 wt.%, preferably more than 95 wt.%, preferably more than 98 wt.%, preferably more than 99 wt.% base fluid.

10. The composition according to any one of claims 1-8 which is a concentrate suitable to prepare the ready-to-use composition according to claim 9; wherein the concentration of the silicate is more than 150 ppm Si (by weight), preferably more than 170 ppm Si, preferably more than 185 ppm Si, most preferably more than 200 ppm Si.

11. The composition according to claim 10 wherein more than 80 wt.%, preferably more than 85 wt.%, preferably more than 90 wt.% of the concentrate is a polyalcohol, preferably a polyacohol selected from the group consisting of monoethylene glycol, monopropylene glycol, 1,3-propanediol and glycerol, most preferably monoethylene glycol.

12. The composition according to claim 10 or 11 wherein the concentrate is suitable to prepare the ready-to-use composition according to claim 9 solely by addition of water and/or alcohol; preferably solely by addition of water, monoethylene glycol, monopropylene glycol, 1,3-propanediol and/or glycerol; most preferably solely by addition of water.

13. A kit for preparing a composition according to any one of claims 1-12 comprising:
(i) a first container comprising a first solution of a silicate in water, alcohol or mixtures thereof, preferably in water, monoethylene glycol, monopropylene glycol, 1,3-propanediol, glycerol, or mixtures thereof, more preferably in water, monoethylene glycol or mixtures thereof, most preferably in water; and
(ii) a second container comprising a second solution of aromatic polyacid according to formula (I) or a salt thereof in water, alcohol or mixtures thereof, preferably in water, monoethylene glycol, monopropylene glycol, 1,3-propanediol, glycerol, or mixtures thereof, more preferably in water, monoethylene glycol or mixtures thereof, most preferably in water; 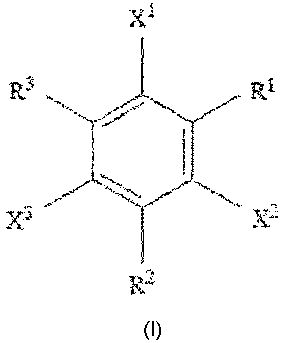
wherein R¹, R² and R³ are each independently selected from hydrogen, COOY, SO₂(OY) or PO(OY)₂;
wherein Y represents hydrogen or a cation;
wherein at least 2 of R¹, R² and R³ are not hydrogen;
wherein X¹, X² and X³ are each independently selected from hydrogen, hydroxy, an alkyl, an aryl, an alcohol, an aldehyde, a ketone, an ester, an amide or an amine;
wherein the concentration of silicate is more than 100 ppm Si (by weight of the solution in the first container), preferably more than 400 ppm Si, preferably more than 1000 ppm Si; and
wherein the concentration of aromatic polyacid is more than 0.1 wt.% (by total weight of the solution in the second container), preferably more than 1 wt.%, more preferably more than 5 wt.%.

14. Use of a compound according to formula (I) 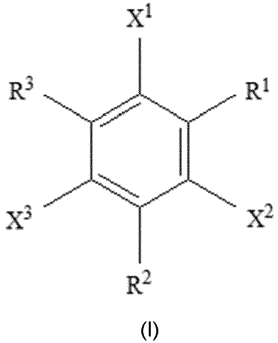
wherein R¹, R² and R³ are each independently selected from hydrogen, COOY, SO₂(OY) or PO(OY)₂;
wherein Y represents hydrogen or a cation;
wherein at least 2 of R¹, R² and R³ are not hydrogen;
wherein X¹, X² and X³ are each independently selected from hydrogen, hydroxy, an alkyl, an aryl, an alcohol, an aldehyde, a ketone, an ester, an amide or an amine;
to improve the corrosion inhibition of a heat-transfer fluid, preferably, to improve the corrosion inhibition of a heat-transfer fluid comprising a silicate, more preferably, to improve the corrosion inhibition of a heat-transfer fluid comprising a silicate wherein the heat-transfer fluid is free of borates and/or nitrites.

15. A method of exchanging heat, comprising:
a. generating heat in a system selected from a combustion engine, a solar system, a fuel cell, an electrical motor, a generator, a battery, a battery electric vehicle, or electronic equipment, preferably in a combustion engine;
b. contacting a composition in accordance with any one of claims 1-13 with the system of step a;
c. transferring heat from the system to the composition;
d. passing the composition through a heat exchanger; and
e. transferring heat away from the composition.

## Patentansprüche

1. Zusammensetzung, die eine Basisflüssigkeit, ein Silikat und eine aromatische Polysäure gemäß Formel (I) oder ein Salz davon umfasst 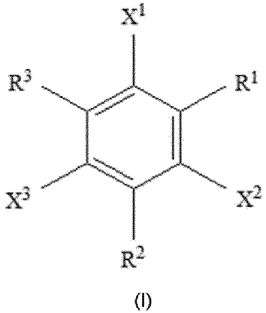
wobei R¹, R² und R³ jeweils unabhängig aus Wasserstoff, COOY, SO₂(OY) oder PO(OY)₂ ausgewählt sind;
wobei Y Wasserstoff oder ein Kation darstellt;
wobei mindestens 2 von R¹, R² und R³ nicht Wasserstoff sind;
wobei X¹, X² und X³ jeweils unabhängig aus Wasserstoff, Hydroxy, einem Alkyl, einem Aryl, einem Alkohol, einem Aldehyd, einem Keton, einem Ester, einem Amid oder einem Amin ausgewählt sind; und
wobei die Basisflüssigkeit aus Wasser, einem Alkohol oder Mischungen davon besteht.

2. Zusammensetzung nach Anspruch 1, wobei das Silikat ein anorganisches Silikat ist, vorzugsweise ein Alkalimetalle metasilikat, vorzugsweise Natriummetasilikat.

3. Zusammensetzung nach Anspruch 1 oder 2, wobei X¹, X² und X³ unabhängig aus Wasserstoff, Hydroxy, einem Alkyl oder einem Alkohol ausgewählt sind, wobei vorzugsweise X¹, X² und X³ unabhängig aus Wasserstoff, Hydroxy, einem C₁-C₄-Alkyl oder einem C₁-C₄-Alkohol ausgewählt sind.

4. Zusammensetzung nach einem der Ansprüche 1-3, wobei die aromatische Polysäure gemäß Formel (I) eine Verbindung gemäß Formel (I)a, (I)b, (I)c oder (I)d ist.
| **Formel** | **R¹** | **R²** | **R³** | **X¹=X²=X³** |
|---|---|---|---|---|
| (I)a | COOY | COOY | COOY | H |
| (I)b | COOY | COOY | H | H |
| (I)c | COOY | SO₂(OY) | H | H |
| (I)d | COOY | PO(OY)₂ | H | H |

5. Zusammensetzung nach einem der Ansprüche 1-4, wobei die Basisflüssigkeit aus Wasser, Monoethylenglykol, Monopropylenglykol, 1,3-Propandiol, Glycerin oder Mischungen davon besteht.

6. Zusammensetzung nach einem der Ansprüche 1-5, wobei das Gewichtsverhältnis von aromatischer Polysäure gemäß Formel (I) zu Silikat im Bereich von 100:1-1:100, vorzugsweise innerhalb des Bereichs von 50:1-1:50, besonders bevorzugt innerhalb des Bereichs von 20:1-1:20, besonders bevorzugt innerhalb des Bereichs von 10:1-1:10, besonders bevorzugt innerhalb des Bereichs von 5:1-1:5, am bevorzugtesten innerhalb des Bereichs von 3:1-1:3 liegt.

7. Zusammensetzung nach einem der Ansprüche 1-6, wobei die Zusammensetzung mehr als 80 Gew.-% (bezogen auf das Gesamtgewicht der Zusammensetzung) Basisflüssigkeit umfasst, wie mehr als 85 Gew.-%, mehr als 90 Gew.-%, mehr als 95 Gew.-%, mehr als 98 Gew.-%, mehr als 99 Gew.-% oder mehr als 99.5 Gew.-%.

8. Zusammensetzung nach einem der Ansprüche 1-7, die ferner eines, zwei oder drei von Folgenden umfasst:
• ein Molybdat, vorzugsweise ein anorganisches Molybdat in einer Menge von mehr als 1 ppm (bezogen auf das Gewicht) Molybdat, vorzugsweise mehr als 10 ppm (bezogen auf das Gewicht), vorzugsweise mehr als 100 ppm (bezogen auf das Gewicht) Molybdat;
• ein Triazol, vorzugsweise Tolyltriazol oder Benzotriazol in einer Menge von mehr als 0.001 Gew.-% (bezogen auf das Gesamtgewicht der Zusammensetzung), vorzugsweise mehr als 0.01 Gew.-%, vorzugsweise mehr als 0.1 Gew.-%; und
• ein aliphatisches Monocarboxylat, vorzugsweise ein aliphatisches Monocarboxylat das aus der Gruppe ausgewählt ist die aus aliphatischen C₇-C₁₀-Monocarboxylaten besteht, besonders bevorzugt ein aliphatisches Monocarboxylat das aus der Gruppe ausgewählt ist die aus aliphatischen C₈-C₉-Monocarboxylaten besteht, in einer Menge von mehr als 0.01 Gew.-% (bezogen auf das Gesamtgewicht der Zusammensetzung), vorzugsweise mehr als 0.1 Gew.-%, vorzugsweise mehr als 0.5 Gew.-%.

9. Zusammensetzung nach einem der Ansprüche 1-8, die eine gebrauchsfertige Zusammensetzung ist, wobei:
• die Konzentration des Silikats innerhalb des Bereichs von 30-150 ppm Si (bezogen auf das Gewicht), vorzugsweise innerhalb des Bereichs von 50-140 ppm Si, vorzugsweise innerhalb des Bereichs von 70-130 ppm Si, am bevorzugtesten innerhalb des Bereichs von 75-125 ppm Si liegt; und
• die Zusammensetzung mehr als 90 Gew.-%, vorzugsweise mehr als 95 Gew.-%, vorzugsweise mehr als 98 Gew.-%, vorzugsweise mehr als 99 Gew.-% Basisflüssigkeit umfasst.

10. Zusammensetzung nach einem der Ansprüche 1-8, die ein Konzentrat ist, das geeignet ist, um die gebrauchsfertige Zusammensetzung nach Anspruch 9 herzustellen; wobei die Konzentration des Silikats mehr als 150 ppm Si (bezogen auf das Gewicht), vorzugsweise mehr als 170 ppm Si, vorzugsweise mehr als 185 ppm Si, am bevorzugtesten mehr als 200 ppm Si beträgt.

11. Zusammensetzung nach Anspruch 10, wobei mehr als 80 Gew.-%, vorzugsweise mehr als 85 Gew.-%, vorzugsweise mehr als 90 Gew.-% des Konzentrats ein Polyalkohol ist, vorzugsweise ein Polyalkohol der aus der Gruppe ausgewählt ist die aus Monoethylenglykol, Monopropylenglykol, 1,3-Propandiol und Glycerin besteht, am bevorzugtesten Monoethylenglykol.

12. Zusammensetzung nach Anspruch 10 oder 11, wobei das Konzentrat geeignet ist um die gebrauchsfertige Zusammensetzung nach Anspruch 9 allein durch die Zugabe von Wasser und/oder Alkohol herzustellen; vorzugsweise allein durch die Zugabe von Wasser, Monoethylenglykol, Monopropylenglykol, 1,3-Propandiol und/oder Glycerin; am bevorzugtesten allein durch die Zugabe von Wasser.

13. Kit zum Herstellen einer Zusammensetzung nach einem der Ansprüche 1-12, das Folgendes umfasst:
(i) einen ersten Behälter, der eine erste Lösung eines Silikats in Wasser, Alkohol oder Mischungen davon umfasst, vorzugsweise in Wasser, Monoethylenglykol, Monopropylenglykol, 1,3-Propandiol, Glycerin oder Mischungen davon, besonders bevorzugt in Wasser, Monoethylenglykol oder Mischungen davon, am bevorzugtesten in Wasser; und
(ii) einen zweiten Behälter, der eine zweite Lösung einer aromatischen Polysäure gemäß Formel (I) oder ein Salz davon in Wasser, Alkohol oder Mischungen davon umfasst, vorzugsweise in Wasser, Monoethylenglykol, Monopropylenglykol, 1,3-Propandiol, Glycerin oder Mischungen davon, besonders bevorzugt in Wasser, Monoethylenglykol oder Mischungen davon, am bevorzugtesten in Wasser; 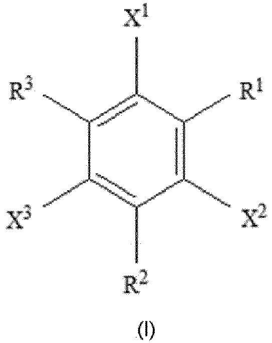
wobei R¹, R² und R³ jeweils unabhängig aus Wasserstoff, COOY, SO₂(OY) oder PO(OY)₂ ausgewählt sind;
wobei Y Wasserstoff oder ein Kation darstellt;
wobei mindestens 2 von R¹, R² und R³ nicht Wasserstoff sind;
wobei X¹, X² und X³ jeweils unabhängig aus Wasserstoff, Hydroxy, einem Alkyl, einem Aryl, einem Alkohol, einem Aldehyd, einem Keton, einem Ester, einem Amid oder einem Amin ausgewählt sind;
wobei die Konzentration des Silikats mehr als 100 ppm Si (bezogen auf das Gewicht der Lösung in dem ersten Behälter), vorzugsweise mehr als 400 ppm Si, vorzugsweise mehr als 1000 ppm Si beträgt; und
wobei die Konzentration der aromatischen Polysäure mehr als 0.1 Gew.-% (bezogen auf das Gesamtgewicht der Lösung in dem zweiten Behälter), vorzugsweise mehr als 1 Gew.-%, besonders bevorzugt mehr als 5 Gew.-% beträgt.

14. Verwendung einer Verbindung gemäß Formel (I) 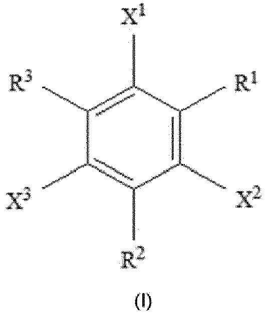
wobei R¹, R² und R³ jeweils unabhängig aus Wasserstoff, COOY, SO₂(OY) oder PO(OY)₂ ausgewählt sind;
wobei Y Wasserstoff oder ein Kation darstellt;
wobei mindestens 2 von R¹, R² und R³ nicht Wasserstoff sind;
wobei X¹, X² und X³ jeweils unabhängig aus Wasserstoff, Hydroxy, einem Alkyl, einem Aryl, einem Alkohol, einem Aldehyd, einem Keton, einem Ester, einem Amid oder einem Amin ausgewählt sind;
um die Korrosionshemmung einer Wärmeübertragungsflüssigkeit zu verbessern, vorzugsweise um die Korrosionshemmung einer Wärmeübertragungsflüssigkeit die ein Silikat umfasst zu verbessern, besonders bevorzugt um die Korrosionshemmung einer Wärmeübertragungsflüssigkeit die ein Silikat umfasst, wobei die Wärmeübertragungsflüssigkeit frei von Boraten und/oder Nitriten ist zu verbessern.

15. Verfahren zum Austauschen von Wärme, das Folgendes umfasst:
a. Erzeugen von Wärme in einem System, das aus einem Verbrennungsmotor, einer Solaranlage, einer Brennstoffzelle, einem Elektromotor, einem Generator, einer Batterie, einem batterieelektrischen Fahrzeug oder einer elektronischen Ausrüstung ausgewählt ist, vorzugsweise in einem Verbrennungsmotor;
b. Inkontaktbringen einer Zusammensetzung nach einem der Ansprüche 1-13 mit dem System aus Schritt a;
c. Übertragen von Wärme aus dem System auf die Zusammensetzung;
d. Weitergeben der Zusammensetzung durch einen Wärmetauscher; und
e. Übertragen der Wärme weg von der Zusammensetzung.

## Revendications

1. Composition comprenant un fluide de base, un silicate et un polyacide aromatique selon la formule (I) ou un de ses sels 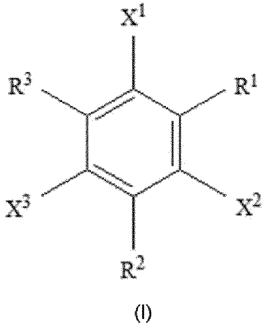
où R¹, R² et R³ sont chacun indépendamment choisis parmi hydrogène, COOY, SO₂(OY) ou PO(OY)₂ ;
où Y représente l'hydrogène ou un cation ;
où au moins 2 parmi R¹, R² et R³ ne sont pas hydrogène ;
où X¹, X² et X³ sont chacun indépendamment choisis parmi hydrogène, hydroxy, un alkyle, un aryle, un alcool, un aldéhyde, une cétone, un ester, un amide ou une amine ; et
où le fluide de base consiste en eau, un alcool ou des mélanges de ceux-ci.

2. Composition selon la revendication 1 où le silicate est un silicate inorganique, de préférence un métasilicate de métal alcalin, de préférence le métasilicate de sodium.

3. Composition selon la revendication 1 ou 2 où X¹, X² et X³ sont indépendamment choisis parmi hydrogène, hydroxy, un alkyle ou un alcool, de préférence X¹, X² et X³ sont indépendamment choisis parmi hydrogène, hydroxy, un alkyle en C₁-C₄ ou un alcool en C₁-C₄.

4. Composition selon l'une quelconque des revendications 1 à 3, où le polyacide aromatique selon la formule (I) est un composé selon la formule (I)a, (I)b, (I)c ou (I)d.
| **Formule** | **R¹** | **R²** | **R³** | **X¹=X²=X³** |
|---|---|---|---|---|
| (I)a | COOY | COOY | COOY | H |
| (I)b | COOY | COOY | H | H |
| (I)c | COOY | SO₂(OY) | H | H |
| (I)d | COOY | PO(OY)₂ | H | H |

5. Composition selon l'une quelconque des revendications 1 à 4, où le fluide de base consiste en eau, monoéthylène glycol, monopropylène glycol, 1,3-propanediol, glycérol ou des mélanges de ceux-ci.

6. Composition selon l'une quelconque des revendications 1 à 5, où le rapport en poids du polyacide aromatique selon la formule (I) au silicate est dans la plage de 100:1 à 1:100, de préférence dans la plage de 50:1 à 1:50, plus préférablement dans la plage de 20:1 à 1:20, plus préférablement dans la plage de 10:1 à 1:10, plus préférablement dans la plage de 5:1 à 1:5, de la manière la plus préférable dans la plage de 3:1 à 1:3.

7. Composition selon l'une quelconque des revendications 1 à 6, où la composition comprend plus de 80 % en poids (en poids total de la composition) de fluide de base, tel que plus de 85 % en poids, plus de 90 % en poids, plus de 95 % en poids, plus de 98 % en poids, plus de 99 % en poids ou plus de 99.5 % en poids.

8. Composition selon l'une quelconque des revendications 1 à 7 comprenant en outre un, deux ou trois des éléments suivants:
• un molybdate, de préférence un molybdate inorganique en une quantité supérieure à 1 ppm (en poids) de molybdate, de préférence supérieure à 10 ppm (en poids), de préférence supérieure à 100 ppm (en poids) de molybdate ;
• un triazole, de préférence le tolyltriazole ou le benzotriazole en une quantité supérieure à 0.001 % en poids (en poids total de la composition), de préférence supérieure à 0.01 % en poids, de préférence supérieure à 0.1 % en poids ; et
• un monocarboxylate aliphatique, de préférence un monocarboxylate aliphatique choisi dans le groupe consistant en les monocarboxylates aliphatiques en C₇-C₁₀, plus préférablement un monocarboxylate aliphatique choisi dans le groupe consistant en les monocarboxylates aliphatiques en C₈-C⁹, en une quantité supérieure à 0.01 % en poids (en poids total de la composition), de préférence supérieure à 0.1 % en poids, de préférence supérieure à 0.5 % en poids.

9. Composition selon l'une quelconque des revendications 1 à 8, qui est une composition prête à l'emploi où:
• la concentration du silicate est dans la plage de 30 à 150 ppm de Si (en poids), de préférence dans la plage de 50 à 140 ppm de Si, de préférence dans la plage de 70 à 130 ppm de Si, de la manière la plus préférable dans la plage de 75 à 125 ppm de Si; et
• la composition comprend plus de 90 % en poids, de préférence plus de 95 % en poids, de préférence plus de 98 % en poids, de préférence plus de 99 % en poids de fluide de base.

10. Composition selon l'une quelconque des revendications 1 à 8 qui est un concentré approprié pour préparer la composition prête à l'emploi selon la revendication 9; où la concentration du silicate est supérieure à 150 ppm de Si (en poids), de préférence supérieure à 170 ppm de Si, de préférence supérieure à 185 ppm de Si, de la manière la plus préférable supérieure à 200 ppm de Si.

11. Composition selon la revendication 10, où plus de 80 % en poids, de préférence plus de 85 % en poids, de préférence plus de 90 % en poids du concentré est un polyalcool, de préférence un polyalcool choisi dans le groupe consistant en monoéthylène glycol, monopropylène glycol, 1,3-propanediol et glycérol, de la manière la plus préférable le monoéthylène glycol.

12. Composition selon la revendication 10 ou 11 où le concentré est approprié pour préparer la composition prête à l'emploi selon la revendication 9 uniquement par addition d'eau et/ou d'alcool; de préférence uniquement par addition d'eau, de monoéthylène glycol, de monopropylène glycol, de 1,3-propanediol et/ou de glycérol; de la manière la plus préférable uniquement par addition d'eau.

13. Kit de préparation d'une composition selon l'une quelconque des revendications 1 à 12 comprenant:
(i) un premier récipient comprenant une première solution d'un silicate dans l'eau, l'alcool ou des mélanges de ceux-ci, de préférence dans l'eau, le monoéthylène glycol, le monopropylène glycol, le 1,3-propanediol, le glycérol, ou des mélanges de ceux-ci, plus préférablement dans l'eau, le monoéthylène glycol ou des mélanges de ceux-ci, de la manière la plus préférable dans l'eau; et
(ii) un deuxième récipient comprenant une deuxième solution de polyacide aromatique selon la formule (I) ou un de ses sels dans l'eau, l'alcool ou des mélanges de ceux-ci, de préférence dans l'eau, le monoéthylène glycol, le monopropylène glycol, le 1,3-propanediol, le glycérol, ou des mélanges de ceux-ci, plus préférablement dans l'eau, le monoéthylène glycol ou des mélanges de ceux-ci, de la manière la plus préférable dans l'eau ; 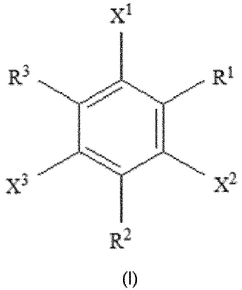
où R¹, R² et R³ sont chacun indépendamment choisis parmi l'hydrogène, COOY, SO₂(OY) ou PO(OY)₂ ;
où Y représente l'hydrogène ou un cation;
où au moins 2 parmi R¹, R² et R³ ne sont pas hydrogène,
où X¹, X² et X³ sont chacun indépendamment choisis parmi hydrogène, hydroxy, un alkyle, un aryle, un alcool, un aldéhyde, une cétone, un ester, un amide ou une amine; où la concentration en silicate est supérieure à 100 ppm de Si (en poids de la solution dans le premier récipient), de préférence supérieure à 400 ppm de Si, de préférence supérieure à 1000 ppm de Si; et
où la concentration de polyacide aromatique est supérieure à 0.1 % en poids (en poids total de la solution dans le deuxième récipient), de préférence supérieure à 1 % en poids, plus préférablement supérieure à 5 % en poids.

14. Utilisation d'un composé selon la formule (I) 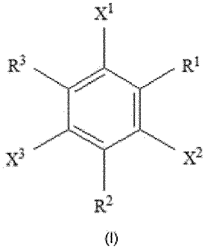
où R¹, R² et R³ sont chacun indépendamment choisis parmi hydrogène, COOY, SO₂(OY) ou PO(OY)₂;
où Y représente l'hydrogène ou un cation;
où au moins 2 parmi R¹, R² et R³ ne sont pas hydrogène,
où X¹, X² et X³ sont chacun indépendamment choisis parmi hydrogène, hydroxy, un alkyle, un aryle, un alcool, un aldéhyde, une cétone, un ester, un amide ou une amine; pour améliorer l'inhibition de la corrosion d'un fluide caloporteur, de préférence, pour améliorer l'inhibition de la corrosion d'un fluide caloporteur comprenant un silicate, plus préférablement, pour améliorer l'inhibition de la corrosion d'un fluide caloporteur comprenant un silicate où le fluide caloporteur est exempt de borates et/ou de nitrites.

15. Procédé d'échange de chaleur, comprenant :
a. générer de la chaleur dans un système choisi parmi un moteur à combustion, un système solaire, une pile à combustible, un moteur électrique, un générateur, une batterie, un véhicule électrique à batterie ou un équipement électronique, de préférence dans un moteur à combustion,
b. mettre en contact une composition selon l'une quelconque des revendications 1 à 13 avec le système de l'étape a;
c. transférer de la chaleur du système à la composition;
d. faire passer la composition à travers un échangeur de chaleur; et
e. évacuer la chaleur de la composition.
